# EUROPÄISCHE PATENTSCHRIFT

(11) **EP 3 909 710 B1**
(45) Veröffentlichungstag und Bekanntmachung des Hinweises auf die Patenterteilung: **03.05.2023**
(21) Anmeldenummer: 21160576.1
(22) Anmeldetag: 03.03.2021
(51) Int. Cl.: B23C 5/00, B23C 5/02, B23C 5/08, B23C 5/10, B23C 5/28

(54) **FRÄSKOPF, BEARBEITUNGSMASCHINE UND VERFAHREN ZUM BETREIBEN EINER BEARBEITUNGSMASCHINE**
MILLING HEAD, PROCESSING MACHINE AND METHOD OF OPERATING A PROCESSING MACHINE
TÊTE DE FRAISAGE, MACHINE DE TRAITEMENT ET PROCÉDÉ DE FONCTIONNEMENT D'UNE MACHINE DE TRAITEMENT

(30) Priorität: 13.05.2020 DE 102020113022
(43) Veröffentlichungstag der Anmeldung: 17.11.2021
(73) Patentinhaber: Urban GmbH & Co. Maschinenbau KG, 87700 Memmingen (DE)
(72) Erfinder: Urban, Martin, 87700 Memmingen (DE); Jocham, Klaus, 87740 Buxheim (DE)
(74) Vertreter: Patentanwälte Olbricht, Buchhold, Keulertz Partnerschaft mbB

(56) Entgegenhaltungen:
- CN-A- 104 475 832
- DE-A1-102016 104 806
- DE-U1-202015 101 493
- US-A1- 2007 031 199

## Beschreibung

Die Erfindung betrifft einen Fräskopf gemäß dem Oberbegriff von Anspruch 1, sowie eine Bearbeitungsmaschine gemäß Anspruch 8 und ein Verfahren zum Betreiben einer Bearbeitungsmaschine mit den Merkmalen des Anspruchs 11.

Bei der Bearbeitung von Profilen, und hierbei insbesondere von gekammerten Kunststoffprofilen für die Herstellung von Fenstern und Türen, werden Fräser eingesetzt. Um unterschiedliche Fräsungen vorzunehmen, werden üblicherweise unterschiedliche Fräser verwendet.

Aus der EP 3072615 A1 ist beispielsweise ein Fräskopf gemäß dem Oberbegriff des Anspruchs 1 bekannt, welcher an einem Grundkörper sowohl einen Stirnfräser wie auch einen Fingerfräser aufweist. Der Fingerfräser steht axial seitlich aus dem Grundkörper hinaus. Die beiden Fräser sind zueinander relativ unbeweglich, so dass die Funktionalität des Fräskopfes eingeschränkt sein kann. Das ist beispielsweise dann der Fall, wenn der Stirnfräser in beengten Raumverhältnissen eine Fräsung vornehmen soll, jedoch der Fingerfräser hinderlich aus dem Grundkörper ragt und das Profil bei Verwendung des Stirnfräsers unerwünscht bearbeiten oder gar beschädigen könnte.

Der Erfindung liegt daher die Aufgabe zugrunde, einen Fräskopf zu schaffen, welcher die Probleme des Standes der Technik überwindet, insbesondere einen Fräskopf vorzuschlagen, welcher eine verbesserte Funktionalität aufweist und eine Funktionsbeeinflussung des Stirnfräsers durch den Fingerfräser verhindert. Ebenso sollen in diesem Sinne eine Bearbeitungsmaschine und ein Verfahren zum Betreiben einer Bearbeitungsmaschine vorgeschlagen werden.

Hauptmerkmale der Erfindung sind im kennzeichnenden Teil von Anspruch 1 angegeben sowie in den Ansprüchen 8 und 11. Ausgestaltungen sind Gegenstand der Ansprüche 2 bis 7 sowie 9 und 10.

Erfindungsgemäß wird daher ein Fräskopf vorgeschlagen, umfassend einen Grundkörper, welcher von einer Quermittelebene durchgriffen ist, und zwei zueinander parallel angeordnete Stirnfräser, wobei die Stirnfräser zum spanabhebende Bearbeiten von Werkstücken ausgebildet sind und jeweils mindestens eine Rotationsachse und wenigstens einen Schneidenträger mit mindestens einer Schneidkante umfassen, wobei der Fräskopf zusätzlich mindestens einen von der mindestens einen Rotationsachse durchgriffenen und um die mindestens eine Rotationsachse rotierbaren Fingerfräser umfasst, wobei zumindest der eine Fingerfräser mittels eines Verstellmittels entlang der Rotationsachse zumindest zwischen einer ausgefahrenen Frässtellung und einer eingefahrenen Ruhestellung verstellbar ist.

Somit ist der zumindest eine Fingerfräser zwischen zumindest zwei Stellungen verstellbar, wobei er in der Ruhestellung ein Fräsen zumindest eines Stirnfräsers nicht beeinflusst. In Ruhestellung kann der zumindest eine Fingerfräser in Richtung der Rotationsachse hinter einer Stirnfläche der Stirnfräser angeordnet sein, in welcher die zumindest eine Schneidkante des Stirnfräsers bewegbar ist. Der Fingerfräser ist also in Ruhestellung in Richtung Grundkörper verstellt. In Frässtellung ist jedoch der Fingerfräser gegenüber dem Grundkörper verstellt und springt gegenüber den Stirnflächen der Stirnfräser vor oder ragt durch eine Schneidebene zumindest teilweise hindurch.

Dieser Fingerfräser dient insbesondere dazu, am Profil vorgesehene Dichtungs- oder Aufnahmenuten zu bearbeiten und diese frei zu fräsen. Der zumindest eine Fingerfräser ist dabei bevorzugt zentral in der Stirnfläche eines der Stirnfräser und/oder auf der Rotationsachse eines der Stirnfräser angeordnet. Gleichzeitig mit dem Einsatz des Fingerfräsers kann eine Bearbeitung der Flächen durch die Stirnseiten des Fräsers bzw. die dortigen Schneidkanten erfolgen (in Frässtellung). Selbstverständlich besteht auch die Möglichkeit, dass eine Bearbeitung mit der Stirnfläche des Stirnfräsers auf den Schweißflächen des Profils mit Fingerfräsern in Ruhestellung und in einem nach- oder vorgelagerten Bearbeitungsschritt eine Bearbeitung mit dem mindestens einen Fingerfräser in Frässtellung durchgeführt wird.

Das Verstellmittel dient dem wahlweisen Verstellen des Fingerfräsers, so dass der Fräskopf eine verbesserte und erweiterte Funktionalität aufweist. So ist der Fräskopf nämlich in Ruhestellung des zumindest einen Fingerfräsers verwendbar wie ein bekannter Fräskopf mit ausschließlich Stirnfräsern, jedoch ohne räumliche Beschränkungen durch den vorhandenen Fingerfräser. Derselbe Fräskopf ist zudem in Frässtellung des Fingerfräsers verwendbar wie ein Fräskopf mit Fingerfräser.

Der erfindungsgemäße Fräskopf ermöglicht zudem aufgrund der Doppelfräser und der Verstellung eine effektivere Bearbeitung. Es ist nämlich nun möglich in einem Arbeitszug, bestehend aus einer ersten Bewegung in eine erste Richtung und einer zweiten Bewegung in eine zur ersten Bewegung unterschiedlichen zweiten Richtung, zunächst in der ersten Bewegung nur mittels der Stirnfräser zu fräsen und in der zweiten Bewegung nur mit den Fingerfräsern zu fräsen, ohne in der ersten Bewegung durch die Fingerfräser räumlich oder verfahrensmäßig beschränkt zu sein.

Die Stirnfräser können auf einer gemeinsamen Rotationsachse verwindungsfest zueinander am Grundkörper und mit diesem drehfest angeordnet sein. Der erfindungsgemäße Fräskopf erlaubt die gleichzeitige Bearbeitung zweier parallel zueinander angeordneter Schweißflächen. Bei entsprechender Aufspannung der Profile in einer Spannebene kann somit eine definierte Bearbeitung erfolgen. Maßtoleranzen in den Profilen können effizient ausgearbeitet werden. In einem einzigen Arbeitsgang können somit zwei Flächen, insbesondere nachfolgend als Schweißflächen genutzte Flächen, gleichzeitig bearbeitet und für den nachfolgenden Schweißvorgang ohne Umspannung vorbereitet werden.

Der Fräskopf nach der Erfindung kann derart weitergebildet sein, dass zumindest der eine Fingerfräser drehfest mit dem Grundkörper verbunden ist, vorzugsweise reversibel drehfest verbunden ist. Der Grundkörper kann drehfest mit den Stirnfräsern verbunden sein. Diese Weiterbildung erspart eine mechanisch aufwändige Drehentkopplung von Stirnfräsern und Fingerfräser/n. Der Fingerfräser ist dabei von Drehrichtung und Drehgeschwindigkeit des Fräsers abhängig. Zudem ist dann lediglich ein einziger Antrieb notwendig - insbesondere kann eine Bearbeitungsmaschine einen einzigen Antrieb für den Fräskopf und somit für die Stirnfräser und den zumindest einen Fingerfräser umfassen. Die Reversibilität dient dem Austausch des Fingerfräsers zum Wechsel bei Umrüstung oder zur Wartung.

Der erfindungsgemäße Fräskopf kann derart ausgebildet sein, dass zumindest der eine Fingerfräser mittels Luftdruck als Verstellmittel in seine Frässtellung und/oder seine Ruhestellung verstellbar ist. Unter Luftdruck kann sowohl Überdruckluft (größer als 1 bar) wie auch Unterdruckluft (kleiner als 1 bar) verstanden werden, wobei hier lediglich exemplarisch auf den mittleren Luftdruck der Atmosphäre auf Meereshöhe abgestellt ist. Der zumindest eine Fingerfräser ist daher in seine Frässtellung mittels Überdruck blasbar oder mittels Unterdruck saugbar. Auch kann er in seine Ruhestellung mittels Überdruck blasbar oder mittels Unterdruck saugbar sein. Die Nutzung von Luftdruck zur Verstellung vermeidet eine aufwändige Verstellmechanik. Der Fräskopf kann beispielsweise durch eine entsprechende Abdichtung so ausgebildet sein, dass Luftdruck nur zur Verstellung angelegt wird und die durch die Verstellung erreichte Position des mindestens einen Fingerfräsers durch den weiter anstehenden Luftdruck gehalten wird. Der Fräskopf kann jedoch beispielsweise auch so ausgebildet sein, dass Luftdruck sowohl zur Verstellung wie auch zur Positionssicherung des mindestens einen Fingerfräsers verwendet wird.

Der Fräskopf nach der Erfindung kann derart ausgebildet sein, dass zumindest der eine Fingerfräser mittels zumindest eines Kraftspeichermittels, vorzugsweise zumindest einer Schraubenfeder, in seine Ruhestellung vorgespannt ist. Vorzugsweise sind jedem Fingerfräser drei gleichmäßig um die Rotationsachse angeordnete Kraftspeichermittel zugeordnet, welche zwischen dem jeweiligen Fingerfräser einerseits und einem zugeordneten Fixierelement, wie einer Fixierplatte wirken. Dadurch ist eine definierte Endlage des Fingerfräsers realisierbar. Zudem muss der Fingerfräser nur dann in seine Frässtellung verstellt werden, wenn er tatsächlich gebraucht wird. Sofern er nicht gebraucht wird, kann er in seiner Ruhestellung verbleiben und zwar ohne, dass für die Sicherung der Ruhestellung weitere Energie aufgewendet werden muss und ohne, dass der Fingerfräser die Fräsung der Stirnfräser negativ beeinflusst. Bei Verwendung von Luftdruck als Verstellmittel überwindet der Luftdruck die Vorspannkraft des Kraftspeichermittels zur Verstellung des mindestens einen Fingerfräsers.

Der erfindungsgemäße Fräskopf kann weiterbildungsgemäß einen ersten Fingerfräser und einen zweiten Fingerfräser umfassen. Somit weist der Fräskopf zwei Fingerfräser auf, wovon jeweils einer zu einer Seite der Quermittelebene angeordnet sein kann. Es kann somit auch bezüglich der Fingerfräser eine beiderseitige Bearbeitung mit dem Fräskopf durchgeführt werden.

Der Fräskopf gemäß der Erfindung kann derart weitergebildet sein, dass der Grundkörper zumindest eine erste Fluidkanalanordnung mit zumindest einem ersten Fluidkanal und/oder eine zweite Fluidkanalanordnung mit zumindest einem zweiten Fluidkanal umfasst, welche/r ein Fluid, vorzugsweise Luft, führen kann/können, und der zumindest eine Fluidkanal zu einem Beaufschlagungsbereich des mindestens einen Fingerfräsers oder eines den Fingerfräser tragenden Elements führt, so dass eine Fluidbeaufschlagung des Beaufschlagungsbereichs zu einer Verstellung des entsprechenden Fingerfräser in seine Frässtellung oder in seine Ruhestellung führt. Die zumindest eine Fluidkanalanordnung kann einen Fluidpfad von fräskopfextern in das Innere des Fräskopfes bereitstellen, um den mindestens einen Fingerfräser zu verstellen. Der mindestens eine Fluidkanal verbindet dabei die Umgebung des Fräskopfes mit dem Beaufschlagungsbereich, wo der Luftdruck zur Verstellung wirken kann. Der mindestens eine Fluidkanal kann sich dabei ausschließlich durch den Grundkörper erstrecken.

Weiterbildungsgemäß kann der Fräskopf vorsehen, dass die erste Fluidkanalanordnung dem ersten Fingerfräser zugeordnet ist, vorzugsweise ausschließlich dem ersten Fingerfräser zugeordnet ist, und/oder die zweite Fluidkanalanordnung dem zweiten Fingerfräser zugeordnet ist, vorzugsweise ausschließlich dem zweiten Fingerfräser zugeordnet ist. Die Zuordnung der Anordnungen zu jeweils einem Fingerfräser dient der gleichmäßigen Verstellung und dem gleichmäßigen Verteilen von Luftdruck zwischen den Fingerfräsern. Es ist denkbar, bei ausschließlicher Zuordnung lediglich einen Fingerfräser zu Verstellen und den anderen Fingerfräser ein seiner Stellung verbleiben zu lassen.

Ein Vorteil der Erfindung liegt insbesondere darin, dass bei einer Weiterbildung der Erfindung entweder beide Fingerfräser gleichartig bzw. gleichzeitig, oder, je nach Bedarf, nur der eine oder andere Fingerfräser bewegt wird. Dies wird insbesondere dadurch erreicht, dass sich in der jeweiligen Fluidkanalanordnung des jeweiligen Fingerfräsers ein steuerbares Ventil, zum Beispiel ein Elektromagnetventil, befindet, dass bei Bedarf den jeweiligen Fluidkanal freigibt oder versperrt.

Der erfindungsgemäße Fräskopf sieht nach einer Weiterbildung vor, dass zumindest eine der Fluidkanalanordnungen mehrere gleichmäßig beabstandete und zumindest abschnittsweise radial bezüglich der Rotationsachse verlaufende erste Fluidkanäle bzw. zweite Fluidkanäle umfasst. Die ersten und/oder zweiten Fluidkanäle können geradlinig oder gebogen verlaufen. Sofern sie radial gerade verlaufen, können sie kurzmöglichst ausgebildet werden, was die Menge an einzusetzender Luft und die Verstellzeit verkürzt.

Der Fräskopf gemäß der Erfindung kann vorsehen, dass die ersten Fluidkanäle und die zweiten Fluidkanäle in Umfangsrichtung zueinander versetzt angeordnet sind. Bei einem weitgehend zylindrischen Grundkörper kann also beispielsweise die erste Fluidkanalanordnung vier erste Fluidkanäle umfassen, welche jeweils um 90° versetzt zueinander angeordnet sind. Auch die zweite Fluidkanalanordnung kann vier zweite Fluidkanäle umfassen, welche ebenfalls jeweils um 90° versetzt zueinander angeordnet sind. Jedoch ist die erste Fluidkanalanordnung zur zweiten Fluidkanalanordnung um 45° versetzt oder verschränkt, so dass sich erste und zweite Fluidkanäle abwechseln und um 45° versetzt zueinander angeordnet sind. Es ist jedoch auch jede andere Teilung denkbar, wobei die Verschränkung der ersten Fluidkanalanordnung zur zweiten Fluidkanalanordnung vorteilhaft der Hälfte des Versatzes von Fluidkanälen innerhalb einer Fluidkanalanordnung entspricht, hier exemplarisch 90°/45°.

Es ist weiterbildungsgemäß ein Fräskopf denkbar, bei welchem zumindest ein Fingerfräser von einem vorzugsweise zylindrischen Fingerfräserträger getragen ist, vorzugsweise drehfest mit diesem verbunden ist. Dadurch kann der Fingerfräser einfach auswechselbar und sicher bei der Verstellung getragen werden. Jeder Fingerfräser kann von einem separaten Fingerfräserträger getragen sein. Der Fingerfräserträger kann in den Grundkörper einsetzbar sein.

Der Fräskopf nach der Erfindung kann vorsehen, dass der zumindest eine Fingerfräserträger an seiner der Quermittelebene zugewandten Seite einen elastischen Anschlagspuffer umfasst, der vorzugsweise aus einem elastomeren Material gebildet ist, welcher eine Verstellbewegung des Fingerfräserträgers in die Ruhestellung abfedert. Dadurch können schädigende Vibrationen und Anschlagsgeräusche vermieden werden.

Es ist weiterbildungsgemäß ein Fräskopf denkbar, bei welchem der zumindest eine Fingerfräserträger an seiner der Quermittelebene zugewandten Seite einen vierten Fluidkanal umfasst und/oder ausbildet, welcher vorzugsweise fluidisch mit zumindest dem ersten und/oder dem zweiten Fluidkanal verbindbar ist und welcher vorzugsweise eine Fluidverbindung zum Beaufschlagungsbereich ausbildet. Der vierte Fluidkanal kann ein Verteilungskanal sein, in welchen alle Kanäle einer Fluidkanalanordnung münden. Der vierte Fluidkanal kann also den ersten bzw. zweiten Fluidkanälen der Fluidkanalanordnungen und dem Beaufschlagungsbereich fluidisch zwischengeschaltet sein. Er dient der gleichmäßigen Verteilung von Luftdruck.

Der Fräskopf kann gemäß einer Weiterbildung derart ausgestaltet sein, dass zumindest ein Fingerfräserträger eine parallel zur Rotationsachse verlaufende Begrenzungsnut umfasst, welche einen Begrenzungsanschlag ausbildet, der einen Verstellweg des Fingerfräsers aus der Ruhestellung in die Frässtellung begrenzt. Dadurch können die Ruhestellung und die Frässtellung mechanisch, sicher und wiederholbar festgelegt werden.

Bei einer Weiterbildung des Fräskopfs nach der Erfindung kann der Grundkörper einen Aufnahmeraum für zumindest einen Fingerfräserträger ausbilden, vorzugsweise umfasst der Grundkörper bei Ausbildung von zwei Aufnahmeräumen einen Verbindungskanal zwischen den Aufnahmeräumen. Der Verbindungskanal kann dem Druckausgleich zwischen den beiden Aufnahmeräumen dienen und kann eine gleichmäßige und symmetrische Verstellung ermöglichen.

Der Fräskopf nach der Erfindung kann derart ausgebildet sein, dass die an dem Fingerfräser angeordnete/n Schneidkante/n und/oder die an dem Schneidenträger des zumindest einen Stirnfräsers angeordnete/n Schneidkante/n mit der Rotationsachse einen spitzen Winkel einschließt/einschließen zur Erzeugung einer Phase an dem Werkstück.

Vorgeschlagen wird zudem eine Bearbeitungsmaschine, insbesondere Kunststoffprofilbearbeitungsmaschine für die Bearbeitung und Verschweißung von Kunststoffprofilen, mit wenigstens einem Fräskopf gemäß zumindest einem der vorhergehenden Absätze. Die sich mit der Bearbeitungsmaschine ergebenden Vorteile sind bereits bezüglich des Fräskopfes beschrieben, worauf hiermit verwiesen wird.

Weiterbildungsgemäß kann die Bearbeitungsmaschine ein Führungselement umfassen, welches den Fräskopf zumindest abschnittsweise umfangsseitig führt, vorzugsweise zumindest einen dritten Fluidkanal aufweist, welcher fluidisch mit zumindest einem ersten Fluidkanal und/oder einem zweiten Fluidkanal verbindbar ist. Somit weist das Führungselement eine Doppelfunktion auf und dient nämlich dem Führen des Fräskopfes oder des Grundkörpers und andererseits dem Führen eines Fluidpfades.

Die Bearbeitungsmaschine gemäß der Erfindung kann vorsehen, dass der dritte Fluidkanal zumindest zeitweise zumindest mit einem ersten Fluidkanal und/oder einem zweiten Fluidkanal fluidisch verbunden ist.

Erfindungsgemäß wird zudem ein Verfahren zum Betreiben einer Bearbeitungsmaschine gemäß zumindest einem der vorhergehenden Absätze vorgeschlagen, umfassend die folgenden Schritte:
- Bewegen des Fräskopfes mit zumindest einem Fingerfräser in Ruhestellung und mit um die Rotationsachse rotierenden Stirnfräsern entlang eines ersten Verstellwegs in eine erste Richtung relativ zu einer Bearbeitungsebene eines Werkstücks,
- dadurch erstes Spanabheben an dem Werkstück mittels zumindest einem der Stirnfräsern,
- Verstellen des zumindest einen Fingerfräsers in Frässtellung,
- Bewegen des Fräskopfes mit zumindest einem Fingerfräser in Frässtellung entlang des ersten Verstellwegs in eine zweite Richtung, welche unterschiedlich zu der ersten Richtung ist, relativ zu der Bearbeitungsebene des Werkstücks,
- dadurch Spanabheben an dem Werkstück mittels zumindest einem der Fingerfräser.

Die sich mit dem Verfahren ergebenden Vorteile sind bereits bezüglich des Fräskopfes beschrieben, worauf hiermit verwiesen wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht auf einen erfindungsgemäßen Fräskopf,
- Fig. 2: eine Draufsicht auf den Fräskopf nach Fig. 1,
- Fig. 3: eine perspektivische Ansicht des Fräskopfes nach Fig. 1,
- Fig. 4: eine Schnittansicht durch den Grundkörper des Fräskopfes nach Fig. 1,
- Fig. 5: eine Halteanordnung einer erfindungsgemäßen Bearbeitungsmaschine,
- Fig. 6: eine Schnittansicht durch ein Führungselement an einer ersten Stelle, und
- Fig. 7: eine Schnittansicht durch das Führungselement an einer zweiten Stelle, die gegenüber der ersten Stelle um 45° versetzt ist.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechende Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

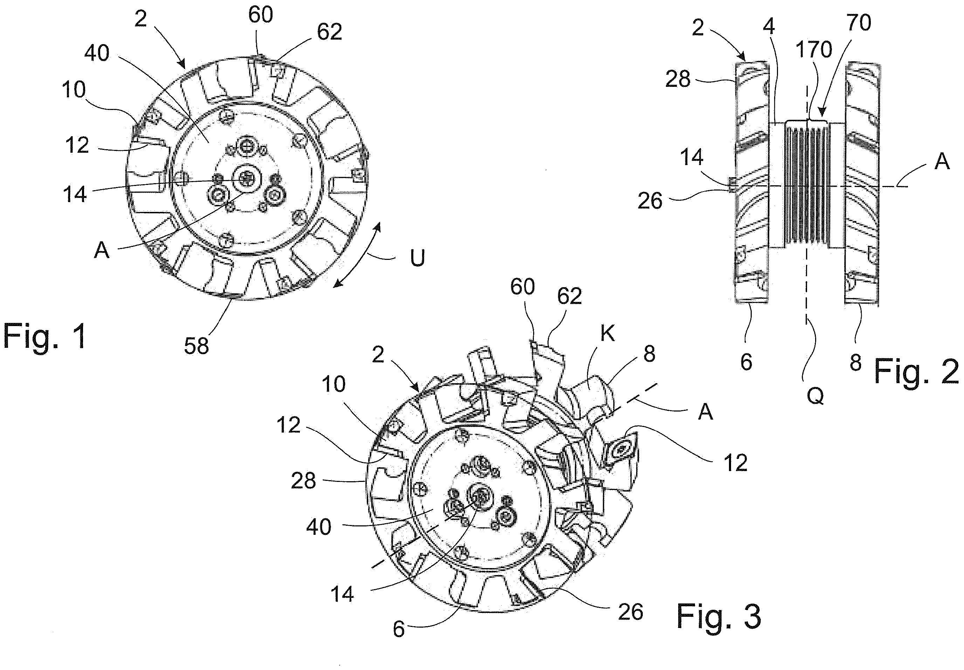

Die Figuren 1 bis 3 zeigen einen erfindungsgemäßen Fräskopf 2 in unterschiedlichen Ansichten. Der Fräskopf 2 umfasst einen weitgehend zylindrischen Grundkörper 4, welcher von einer Quermittelebene Q durchgriffen ist. Umfangsseitig trägt der Grundkörper 4 zwei zueinander parallel angeordnete und drehfest mit dem Grundkörper 4 verbundene Stirnfräser 6, 8, welche zum spanabhebende Bearbeiten von Werkstücken ausgebildet sind. Diese sind auf einer gemeinsamen Rotationsachse A angeordnet und werden im Ausführungsbeispiel durch einen Keilrippenriemen 56 eines Riementriebs angetrieben.

Als zu dem Begriff Stirnfräser gleichbedeutend gelten folgende weiteren nachfolgend aufgelisteten Fräser: Planfräser, Stirnplanfräser, Walzenfräser, Walzenstirnfräser

Am Umfang des Grundkörpers 4 sind die Stirnfräser 6, 8 mit Schaufelelementen 58 sowie Schneidenträger 10 im Wechsel angeordnet. Die Schneidenträger 10 tragen im Ausführungsbeispiel Schneidelemente 60, die im Ausführungsbeispiel als Wendeschneidplatten ausgebildet sind. Die Schneidelemente 60 verfügen über Schneidkanten 12, die gegenüber der Abschlusskante 62 der Schneidenträger 10 vorstehen. Der hier dargestellte Fräskopf 2 weist insgesamt zwei Stirnfräser 6, 8 oder Stirnplanfräser auf, d.h. die gegenüber der Abschlusskante 62 axial vorstehenden Schneidkanten 12 greifen bei der Bearbeitung in das abzutragende Material ein und zerspanen dieses. Die Schneidkanten spannen dabei eine Schneidebene 28 auf. Die Bearbeitung erfolgt somit über die Stirnflächen der beiden Stirnfräser 6, 8. Die Schaufelelemente 58 weisen eine Krümmung K auf, die bei Rotation der Stirnfräser 6, 8 der Generierung eines Luftstroms dient, der die durch die Schneidkanten 12 abgetragenen Frässpäne von der zu bearbeitenden Fläche abzuziehen und gegebenenfalls in das den Fräskopf 2 in der Regel umschließende Gehäuse (nicht dargestellt) einsaugt. Diese Sogwirkung wird durch die Krümmung K begünstigt bzw. bewirkt.

Neben den beiden Stirnfräsern 6, 8, die axial außenseitig am Grundkörper 4 angeordnet sind, verfügt der hier gezeigte Fräskopf 2 über zwei auf der Rotationsachse A vorgesehene Fingerfräser 14, 16, wovon lediglich einer in den Fig. 1 bis 3 gezeigt ist. Diese können unter anderem dazu dienen, eine Aufnahmenut bei Bearbeitung von Stirnflächen eines Profils frei zu fräsen. Selbstverständlich kann mit den Fingerfräsern 14, 16 auch ein Umfangsfräsen durchgeführt werden. Dies bedingt eine entsprechende Steuerung des Fräskopfes 2 und der Fingerfräser 14, 16 und eine Bewegung des Fräskopfes 2 relativ zum zu bearbeitenden Werkstück. Von den Fingerfräsern 14, 16 ist jeweils einer zu einer Seite der Quermittelebene Q angeordnet, wobei insbesondere Fig. 2 veranschaulicht, dass der eine Fingerfräser 14 in seiner ausgefahrenen Frässtellung und der andere Fingerfräser 16 in seiner eingefahrenen Ruhestellung dargestellt ist. In der Frässtellung durchragen die Fingerfräser 14, 16 zumindest abschnittsweise die Schneidebene 28, in der Ruhestellung sind die Fingerfräser 14, 16 grundkörperseitig hinter die Schneideben 28 zurückgestellt. Die Fingerfräser 14, 16 sind drehfest mit dem Grundkörper 4 verbunden, jedoch ist die Drehfestigkeit auch wieder lösbar, also reversibel.

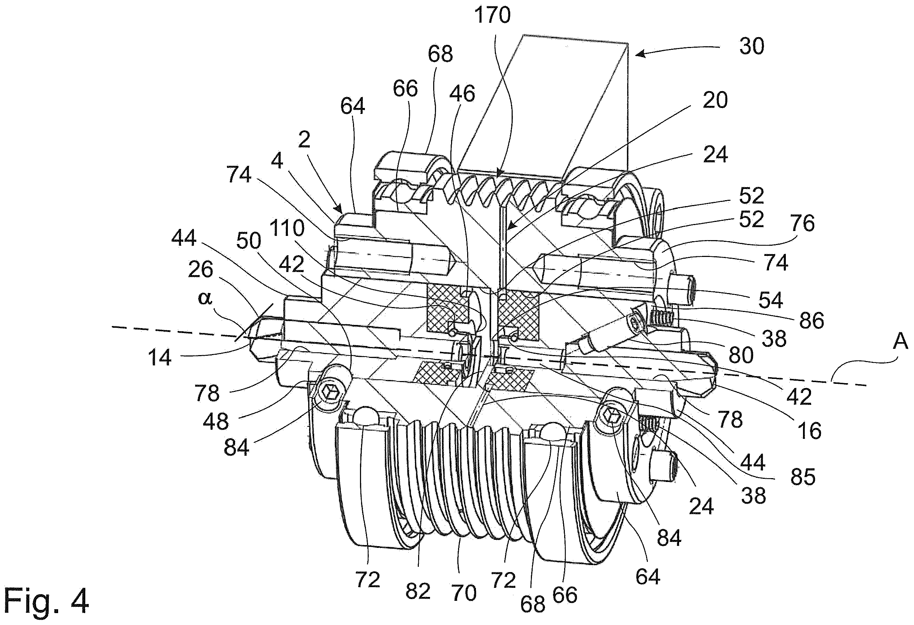

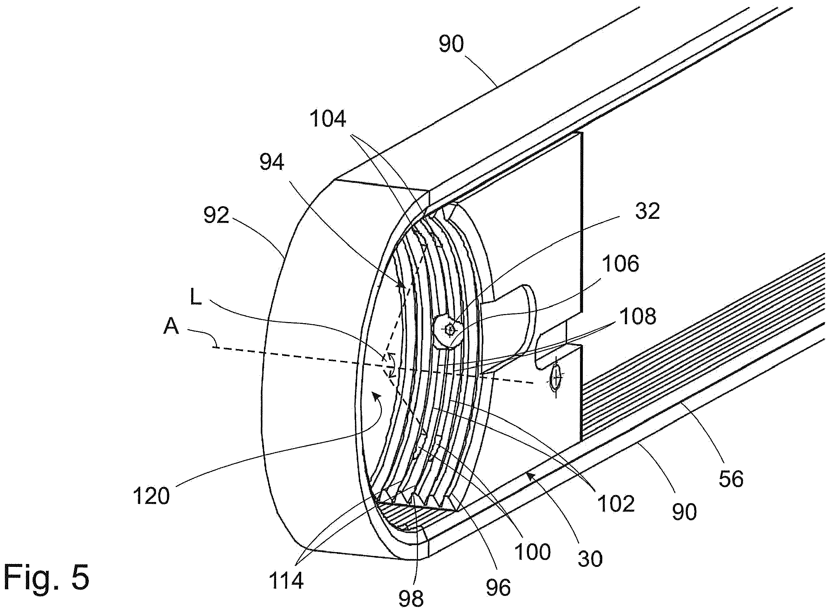

Fig. 4 zeigt einen L-förmig verlaufenden Schnitt durch den Grundkörper 4, wobei zur Veranschaulichung die beiden an ersten Aufnahmeabschnitten 64 angeordneten Stirnfräser 6, 8 ausgeblendet sind. Zur Fixierung der Stirnfräser 6, 8 ist eine axiale Fixierplatte 40 (siehe Figur 1) vorgesehen, welche mittels in Bohrungen 74 eingreifenden Schrauben fixiert wird und gegen eine axiale Stirnfläche 76 des Grundkörpers 4 anliegt. Der Grundkörper 4 ist abgestuft und zylindrisch ausgebildet und ist, um Unwuchten zu vermeiden, bezüglich der Rotationsachse A rotationssymmetrisch ausgebildet sein. Der Grundkörper 4 weist im Wesentlichen drei unterschiedliche Durchmesser auf, wobei der kleinste Durchmesser einen Teil des ersten Aufnahmeabschnitts 64 ausbildet, der zweite Durchmesser einen Teil eines zweiten Aufnahmeabschnitts 66 für ein Lager, hier ein Kugellager 68, ausbildet und der größte Durchmesser umfangsseitig Rillen 70 aufweist. In die Rillen 70 greift der Keilrippenriemen 56 formentsprechend ein, um den Grundkörper 4 in eine Rotationsbewegung um die Rotationsachse A zu versetzen. Die beiden Kugeln 72 umfassenden Kugellager 68 lagern den Grundkörper 4 dabei. In die Rillen 70 greift ebenfalls ein Führungselement 30 ein, welches in Fig. 5 separat zum Grundkörper 4 dargestellt ist.

Jeder der beiden Fingerfräser 14, 16 ist von einem vorzugsweise zylindrischen Fingerfräserträger 44 getragen. Hierzu weist jeder Fingerfräserträger 44 eine zentrale Ausnehmung 78 auf, in welche der entsprechende stiftartige Fingerfräser 14, 16 einsetzbar ist. Im Inneren der Ausnehmung 78, der Quermittelebene Q zugewandt, besitzt die Ausnehmung 78 ein Innengewinde, in die ein Gewindestift 85 eingeschraubt ist und eine axiale Anlagefläche für das rückseitige Ende des Fingerfräser 14,16 bildet. Da der Gewindestift 85 in dem Innengewinde axial verstellt werden kann, ist so die genaue Endlage der Schneidkanten 26 einstellbar. Der Fingerfräser 14, 16 ist in dieser eingesetzten Stellung mittels einer Fixierschraube 80 gegen den Gewindestift 85 fixierbar, welche durch den Fingerfräserträger 44 greift und eine axiale Verstellung des Fingerfräsers 14, 16 gegenüber dem Fingerfräserträger 44 verhindert. Der Fingerfräser 14, 16 ist dadurch auch drehfest mit dem Fingerfräserträger 44 verbunden.

Der Grundkörper 4 weist für die beiden Fingerfräserträger 44 jeweils einen Aufnahmeraum 52 auf. Zwischen den Aufnahmeräumen 52 ist eine Trennwand 82 in der Quermittelebene Q und einteilig mit dem Grundkörper 4 angeordnet. Die beiden Aufnahmeräume 52 sind über einen Verbindungskanal 54 in der Trennwand 82 fluidisch miteinander verbunden. In dem Aufnahmeraum 52 ist der entsprechende Fingerfräserträger 44 axial entlang der Rotationsachse A verstellbar. Die Fingerfräserträger 44 können an ihrer der Quermittelebene Q zugewandten Seite einen elastischen Anschlagspuffer umfassen, der eine Verstellbewegung des Fingerfräserträgers 44 in die Ruhestellung abfedert, beispielsweise gegen die Trennwand 82, wobei ein solcher Anschlagspuffer nicht gezeigt ist.

Die Fingerfräserträger 44 umfassen eine parallel zur Rotationsachse A verlaufende Begrenzungsnut 48. Diese ist beispielsweise bei dem den Fingerfräser 14 tragenden Fingerfräserträger 44 gezeigt. Die Begrenzungsnuten 48 sind axial außenseitig offen und bilden axial innenseitig, d.h. an ihrem der Quermittelebene Q zugewandten Ende, einen Begrenzungsanschlag 50 aus. Durch den Grundkörper 4 ist eine Anschlagsschraube 84 für je einen Fingerfräserträger 44 einschraubbar, vorzugsweise in radialer Richtung. Die Anschlagsschraube 84 ragt mit ihrem Ende sowohl in den Aufnahmeraum 52 ein als auch in die Begrenzungsnut 48. Dadurch kann die Anschlagsschraube 84 an dem Begrenzungsanschlag 50 anliegen und so einen Verstellweg des Fingerfräserträgers 44 und somit des entsprechenden Fingerfräsers 14, 16 aus der Ruhestellung (gezeigt von Fingerfräser 16) in die Frässtellung (gezeigt von Fingerfräser 14) begrenzen. Die Anschlagsschrauben 84 liegen auch an den Seitenwänden der Begrenzungsnuten 48 formschlüssig an, um die Fingerfräserträger 44 drehfest mit dem Grundkörper 4 zu verbinden.

Alternativ ist jedoch auch denkbar, dass der Fingerfräserträger 44 eine axial verlaufende Feder aufweist, welche in eine korrespondierende Nut im Grundkörper 4 eingreift, um eine axiale Verstellung zu führen und, um eine Drehfestigkeit von Fingerfräserträger 44 und Grundkörper zu gewährleisten.

Jeder der Fingerfräser 14, 16 ist mittels zumindest eines Kraftspeichermittels, hier vorzugsweise jeweils dreier als Druckfedern ausgebildeten Schraubenfedern 38, in seine Ruhestellung vorgespannt. Die Kraftspeichermittel sind gleichmäßig um die Rotationsachse A angeordnet und stützen sich einerseits an einer axialen Stirnfläche 86 des Fingerfräserträgers 44 und andererseits an der Innenfläche der Fixierplatte 40 oder der Innenseite des Stirnfräser 6, 8 (je nach Ausgestaltung der Konstruktion) ab. Die Kraftspeichermittel drücken also den Fingerfräserträger 44 gegen die Anschlagschraube 84.

Es ist erkennbar, dass die an den Fingerfräsern 14, 16 angeordneten Schneidkanten 26 mit der Rotationsachse A einen spitzen Winkel α einschließen, um eine Phase an dem Werkstück zu erzeugen.

Fig. 5 zeigt das Fräsaggregat nach der Erfindung von einer Bearbeitungsmaschine, insbesondere einer Kunststoffprofilbearbeitungsmaschine für die Bearbeitung und Verschweißung von Kunststoffprofilen.

Um die Übersichtlichkeit in Figur 5 nicht zu beeinträchtigen, sind in Figur 5 einige Teile des Fräsaggregates ausgeblendet worden. Hierzu gehört zum Beispiel der Fräskopf 2, dem man sich in den zylindrischen Innenraum 120 eingebaut denken kann, sowie die Lagerung des Fräskopfes 2 über die Kugellager 68 an dem Führungselement 30. Auch ist in Figur 5 der Antrieb für den Keilrippenriemen 56 nicht gezeigt, der sich im hinteren, dem Innenraum 120 abgewandten Bereich, gegebenenfalls auch verbunden mit oder gelagert an dem Führungselement 30, befindet.

Der Keilrippenriemen 56 liegt im zusammengebauten Zustand des Fräsaggregates auf dem der Quermittelebene Q zugewandten Mittelbereich 170, mit den Rillen 70, des Grundkörpers 4 auf. Die Anordnung des Keilrippenriemen 56 ist hierbei der Art, dass sich zwischen zwei Gradsabschnitte 90 ein diese Gradsabschnitte 90 verbindender Kreisbogenabschnitt 92 (mit einer Umlenkung des Keilrippenriemen 56 von 180°) befindet. Im Bereich des Kreisbogenabschnittes 92 liegt der Keilrippenriemen 56 auf dem Mittelbereich 170 des Fräskopfes 2 auf und treibt diesen an.

Das Führungselement 30 weist an seiner dem Kreisbogenabschnitt 92 gegenüberliegenden Seite einen kreisbogenartigen Führungsabschnitt 94 auf, welcher Keilrippen 96 umfasst, die formentsprechend in die Rillen 70 des Mittelbereiches 170 des Fräskopfes 2 eingreifen.

Das Führungselement 30 umfasst die Keilrippen 96, hier exemplarisch sechs Stück, wobei die jeweils beidseits der Quermittelebene Q beiden äußeren Keilrippen 96 eine durchgehend gleichmäßige Höhe aufweisen. Die beiden inneren Keilrippen 96 jedoch weisen lediglich in ihren umfangsseitigen Endbereichen die Höhe der benachbarten Keilrippen 96 auf. Die Höhe der beiden mittleren Keilrippen 96 ist nämlich in deren jeweiligem Zentralbereich gegenüber ihrer endseitigen Höhe reduziert. Der Keilrippenkamm 98 jeder der beiden mittleren Keilrippen 96 geht ausgehend von der endseitigen Ausgangshöhe in eine höhenreduzierende Schräge 100 und dann in einen höhenreduzierten Kammabschnitt 102 bzw. Zentralbereich über. Dem Keilrippenkamm 98 umfangsseitig weiter folgend geht der höhenreduzierte Kammabschnitt 102 in eine zweite Schräge 104 über und dann in den endseitigen Bereich des Keilrippens 96 mit erneut endseitiger Ausgangshöhe. Zwischen den beiden Schrägen 100, 104 eines jeden entsprechenden Keilrippens 96 ist daher ein kreisbogenartiger Überdeckungsabschnitt 108 mit einer Überdeckungslänge L ausgebildet.

Das Führungselement 30 weist zudem im Führungsabschnitt 94 eine Überdeckungsausnehmung 106 auf, welche die beiden höhenreduzierten Kammabschnitt 102 unterbricht, vorzugsweise in deren umfangsseitiger Mitte. Die Überdeckungsausnehmung 106 ist bohrungsartig ausgebildet und weist einen Durchmesser auf, welcher dem Abstand beider Außenflanken der mittleren Keilrippen 96 entspricht. Die Tiefe der Überdeckungsausnehmung 106, bezogen auf die endseitiger Ausgangshöhe der Keilrippen 96, kann größer sein, als die Höhe der Keilrippen 96.

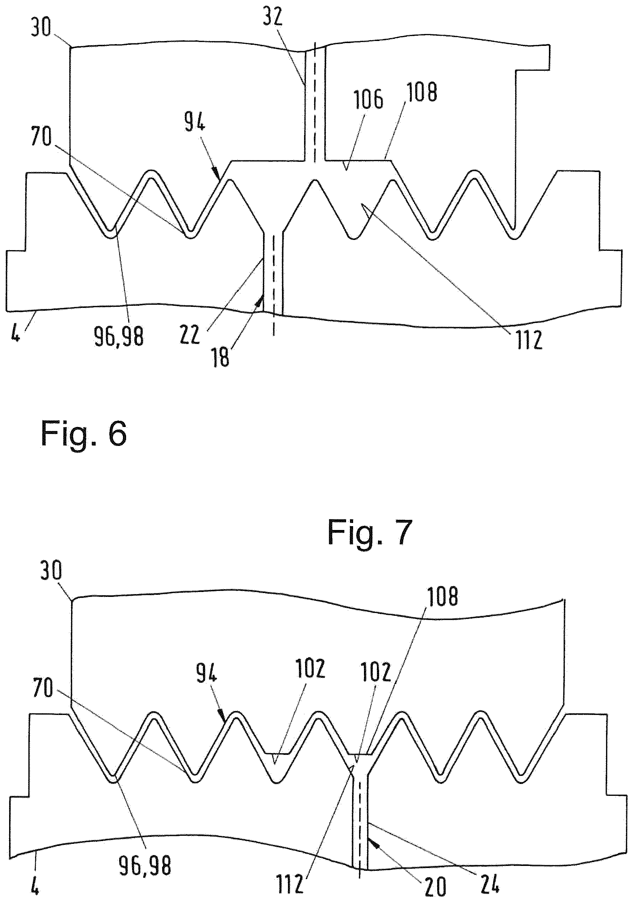

Auf die Verstellung der Fingerfräser 14, 16 zwischen ihrer Ruhestellung und ihrer Frässtellung soll nun nachfolgend insbesondere bezüglich der Fig. 6 und 7 eingegangen werden. Zur Verstellung dient als Verstellmittel Luftdruck, der in diversen Fluidkanälen entlang von Fluidpfaden geführt werden kann. Die Fig. 6 und 7 zeigen jeweils einen Ausschnitt eines Schnittbereichs zwischen dem Grundkörper 4 und dem Führungselement 30, wobei Fig. 6 einen Schnitt zentral durch die Überdeckungsausnehmung 106 zeigt und Fig. 7 einen dazu um 45° bezüglich der Rotationsachse A versetzten Schnitt. In den Fig. 6 und 7 sind der Grundkörper 4 und das Führungselement 30 lediglich aus Gründen des besseren Verständnisses mit einem zwischengeordneten Abstand dargestellt. Betriebsmäßig greifen die Keilrippen 96 in die Rillen 70 ein.

Der Grundkörper 4 umfasst eine erste Fluidkanalanordnung 18 mit ersten Fluidkanälen 22 und eine zweite Fluidkanalanordnung 20 mit zweiten Fluidkanälen 24. Jede Fluidkanalanordnung 18, 20 umfasst im Ausführungsbeispiel vier gleichmäßig beabstandete (also um 90° versetzt) und radial bezüglich der Rotationsachse A verlaufende erste Fluidkanäle 22 bzw. zweite Fluidkanäle 24. Die ersten Fluidkanäle 22 und die zweiten Fluidkanäle 24 sind in Umfangsrichtung U zueinander um 45° versetzt angeordnet. Daher zeigt Fig. 6 einen ersten Fluidkanal 22 und Fig. 7 einen zweiten Fluidkanal 24. Die ersten Fluidkanäle 22 erstrecken sich von der Umfangsfläche des Grundkörpers aus einer Rille 70 zu dem Aufnahmeraum 52, in welchem der Fingerfräserträger 44 des Fingerfräsers 14 angeordnet ist. Analog hierzu erstrecken sich die zweiten Fluidkanäle 24 von der Umfangsfläche des Grundkörpers aus einer Rille 70 zu dem Aufnahmeraum 52, in welchem der Fingerfräserträger 44 des Fingerfräsers 16 angeordnet ist, zu sehen in Fig. 4. Daher ist die erste Fluidkanalanordnung 18 dem ersten Fingerfräser 14 zugeordnet und die zweite Fluidkanalanordnung 20 dem zweiten Fingerfräser 16 zugeordnet.

Das Führungselement 30 weist zumindest einen dritten Fluidkanal 32 auf, welcher zentral in die Überdeckungsausnehmung 106 einmündet und anderenends mit einem Luftdruckerzeugungsmittel, wie beispielsweise einem Kompressor, verbindbar ist.

Jeder Fingerfräserträger 44 (der linke bzw. rechte Fingerfräserträger 44) weist an seiner der Quermittelebene Q zugewandten Seite eine ringförmige Ausnehmung auf, die mit der Trennwand 82 einen vierten Fluidkanal 46 ausbildet. Fig. 4 zeigt, dass die vierten Fluidkanäle 46 fluidisch mit den ersten bzw. dem zweiten Fluidkanälen 22, 24 (Fluidkanal 22 ist dem linken Fingerfräserträger 44 zugeordnet, in Figur 4 wegen des gewählten Ausschnittes nicht zu sehen, Fluidkanal 24 ist dem rechten Fingerfräserträger 44 zugeordnet) verbindbar sind. Ausgehend von den ringförmigen Fluidkanälen 46 führt jeweils zumindest ein fünfter Fluidkanal 110 zu einem Beaufschlagungsbereich 42 des jeweiligen Fingerfräserträgers 44. Hauptsächlich auf den Beaufschlagungsbereich 42 wirkt der Luftdruck der Pressluftleitung , so dass eine Fluidbeaufschlagung des Beaufschlagungsbereichs 42 zu einer Verstellung des entsprechenden Fingerfräser 14, 16 in seine Frässtellung oder in seine Ruhestellung führt.

Der Luftdruck gelangt nun über den dritten Fluidkanal 32 durch das Führungselement 30 in die Überdeckungsausnehmung 106. Zwischen dem Grundkörper 4 und dem Führungsabschnitt 94 des Führungselements 30 bilden die Überdeckungsausnehmung 106 und die beiden höhenreduzierten Kammabschnitte 102 bzw. der Überdeckungsabschnitt 108 mit einer Überdeckungslänge L einen Übergaberaum 112 aus, welcher Teil des Fluidpfades ist. Dieser Übergaberaum 112 ist umfangsseitig von den Keilrippen 96 in endseitiger Ausgangshöhe abgedichtet - die Keilrippen 96 bilden dort Dichtabschnitte 114 aus. Dieser Übergaberaum 112 oder die Überdeckungslänge L ist in Umfangsrichtung U derart bemessen, dass zu jedem Zeitpunkt während der Rotation des Grundkörpers 4 gegenüber dem Führungselement 30 jede Fluidkanalanordnung 18, 20 mit dem Übergaberaum 112 oder direkt mit dem dritten Fluidkanal 32 fluidisch verbunden ist. Im vorliegenden Fall kann die Überdeckungslänge L in Umfangsrichtung etwa ein Kreisbogenmaß vom 100° aufweisen. Während dann nämlich beispielsweise kurz bevor ein Fluidkanal 22, 24 einer Fluidkanalanordnung 18, 20 eine Fluidverbindung mit dem Übergaberaum 112 verliert, kommt ein in Rotationsrichtung nachfolgender Fluidkanal 22, 24 der entsprechenden Fluidkanalanordnung 18, 20 in Überdeckung oder Fluidverbindung mit dem Übergaberaum 112. Vorteilhaft ist die Ausführung, wenn die Überdeckungslänge L in Umfangsrichtung mindestens so groß ist wie der Abstand zweier benachbarter Fluidkanäle einer Fluidkanalanordnung, vorzugsweise dem 1,1 bis 1,5-fachen entspricht. Der dritte Fluidkanal 32 ist somit zumindest zeitweise zumindest mit einem ersten Fluidkanal 22 und/oder einem zweiten Fluidkanal 24 fluidisch verbunden.

Die Anmelderin behält es sich vor für die hier beschriebene Schnittstelle zur Einleitung von Pressluft in ein rotierende System, zum Beispiel zu Betätigung eines Elementes in dem rotierenden System, zum Beispiel im Rahmen einer Teilanmeldung, eigenständigen Schutz zu beanspruchen. Ein solches System wäre dadurch gekennzeichnet, dass sich in einem Führungselement 30 die Druckluftzuleitung befindet. Die in der Druckluftzuleitung befindliche, unter Druck stehende Pressluft wird über die beschriebene Kanalordnung in den Grundkörper 4 eines beliebig ausgestalteten rotierenden Körpers eingeleitet. Mithilfe dieser Pressluft werden dann in dem rotierenden Körper beliebige Elemente für unterschiedliche Funktionen angesteuert.

Eine Bearbeitung eines Profils oder zweier Profile kann nun mittels Betreiben einer Bearbeitungsmaschine erfolgen, wobei ein entsprechendes Verfahren die folgenden Schritte vorsehen kann:
- Bewegen des Fräskopfes 2 mit zumindest einem Fingerfräser 14, 16 in Ruhestellung und mit um die Rotationsachse A rotierenden Stirnfräsern 6, 8 entlang eines ersten Verstellwegs in eine erste Richtung relativ zu einer Bearbeitungsebene eines Werkstücks,
- dadurch erstes Spanabheben an dem Werkstück mittels zumindest einem der Stirnfräsern 6, 8. Die Fingerfräser stehen nicht durch die Schneidebene 28 heraus und behindern daher den Fräskopf 2 nicht. Hier kann zunächst nur mittels Stirnfräsern 6, 8 abgetragen werden.
- Danach kann ein Verstellen des zumindest einen Fingerfräsers 14, 16 in Frässtellung erfolgen, sowie
- ein Bewegen des Fräskopfes 2 mit zumindest einem um die Rotationsachse A rotierenden Fingerfräser 14, 16 in Frässtellung entlang des ersten Verstellwegs in eine zweite Richtung, welche unterschiedlich zu der ersten Richtung ist, relativ zu der Bearbeitungsebene des Werkstücks,
- dadurch Spanabheben an dem Werkstück mittels zumindest einem der Fingerfräser 14, 16.

Es ist also mittels der Fräskopfes 2 eine Hinbewegung möglich, in welcher ausschließlich die Stirnfräsern 6, 8 abtragen und einer unmittelbar nachfolgenden Rückbewegung, in welcher ausschließlich zumindest ein Fingerfräser 14, 16 abträgt.

Zur Vermeidung von Wiederholungen sollen vorrichtungsgemäß offenbarte Merkmale auch als verfahrensgemäß offenbart gelten. Ebenso sollen verfahrensgemäß offenbarte Merkmale als vorrichtungsgemäß offenbart gelten.

**Bezugszeichenliste**

| | | | |
|---|---|---|---|
| 2 | Fräskopf | 76 | Stirnfläche |
| 4 | Grundkörper | 78 | Ausnehmung |
| 6 | erster Stirnfräser | 80 | Fixierschraube |
| 8 | zweiter Stirnfräser | 82 | Trennwand |
| 10 | Schneidenträger | 84 | Anschlagsschraube |
| 12 | Schneidkante | 85 | Gewindestift |
| 14 | erster Fingerfräser | 86 | Stirnfläche |
| 16 | zweiter Fingerfräser | 90 | Gradabschnitte |
| 18 | erste Fluidkanalanordnung | 92 | Kreisbogenabschnitt |
| 20 | zweite Fluidkanalanordnung | 94 | Führungsabschnitt |
| 22 | erster Fluidkanal | 96 | Keilrippen |
| 24 | zweiter Fluidkanal | 98 | Keilrippenkamm |
| 26 | Schneidkante | 100 | Schräge |
| 28 | Schneidebene | 102 | Kammabschnitt |
| 30 | Führungselement | 104 | Schräge |
| 32 | dritter Fluidkanal | 106 | Überdeckungsausnehmung |
| 38 | Schraubenfeder | 108 | Überdeckungsabschnitt |
| 40 | Fixierplatte | 110 | fünfter Fluidkanal |
| 42 | Beaufschlagungsbereich | 112 | Übergaberaum |
| 44 | Fingerfräserträger | 114 | Dichtabschnitt |
| 46 | vierter Fluidkanal | 120 | Innenraum |
| 48 | Begrenzungsnut | 170 | Mittelbereich |
| 50 | Begrenzungsanschlag | | |
| 52 | Aufnahmeraum | | |
| 54 | Verbindungskanal | A | Rotationsachse |
| 56 | Keilrippenriemen | K | Krümmung |
| 58 | Schaufelelement | L | Überdeckungslänge |
| 60 | Schneidelement | Q | Quermittelebene |
| 62 | Abschlusskante | U | Umfangsrichtung |
| 64 | erster Aufnahmeabschnitt | | |
| 66 | zweiter Aufnahmeabschnitt | α | Winkel |
| 68 | Kugellager | | |
| 70 | Rille | | |
| 72 | Kugel | | |
| 74 | Bohrung | | |

## Patentansprüche

1. Fräskopf umfassend einen Grundkörper (4), welcher von einer Quermittelebene (Q) durchgriffen ist, und zwei zueinander parallel angeordnete Stirnfräser (6, 8), wobei die Stirnfräser (6, 8) zum spanabhebende Bearbeiten von Werkstücken ausgebildet sind und jeweils mindestens eine Rotationsachse (A) und wenigstens einen Schneidenträger (10) mit mindestens einer Schneidkante (12) umfassen, wobei der Fräskopf (2) zusätzlich mindestens einen von der mindestens einen Rotationsachse (A) durchgriffenen und um die mindestens eine Rotationsachse (A) rotierbaren Fingerfräser (14, 16) umfasst, **dadurch gekennzeichnet, dass** zumindest der eine Fingerfräser (14, 16) mittels eines Verstellmittels entlang der Rotationsachse (A) zumindest zwischen einer ausgefahrenen Frässtellung und einer eingefahrenen Ruhestellung verstellbar ist.

2. Fräskopf nach einem der vorangehenden Ansprüche, **dadurch gekennzeichnet, dass** zumindest der eine Fingerfräser (14, 16) mittels Luftdruck als Verstellmittel in seine Frässtellung und/oder seine Ruhestellung verstellbar ist.

3. Fräskopf nach einem der vorangehenden Ansprüche, **dadurch gekennzeichnet, dass** zumindest der eine Fingerfräser (14, 16) mittels zumindest eines Kraftspeichermittels, vorzugsweise einer Schraubenfeder (38), in seine Ruhestellung vorgespannt ist, vorzugsweise sind jedem Fingerfräser (14,16) drei gleichmäßig um die Rotationsachse (A) angeordnete Kraftspeichermittel zugeordnet, welche zwischen dem jeweiligen Fingerfräser (14,16) einerseits und einer zugeordneten Fixierplatte (40) wirken.

4. Fräskopf nach einem der vorangehenden Ansprüche, **dadurch gekennzeichnet, dass** er einen ersten Fingerfräser (14) und einen zweiten Fingerfräser (16) umfasst.

5. Fräskopf nach einem der vorangehenden Ansprüche, **dadurch gekennzeichnet, dass** der Grundkörper (4) zumindest eine erste Fluidkanalanordnung (18) mit zumindest einem ersten Fluidkanal (22) und/oder eine zweite Fluidkanalanordnung (20) mit zumindest einem zweiten Fluidkanal (24) umfasst, welche/r ein Fluid, vorzugsweise Luft, führen kann/können, und der zumindest eine Fluidkanal (22, 24) zu einem Beaufschlagungsbereich (42) des mindestens einen Fingerfräsers (14, 16) führt, so dass eine Fluidbeaufschlagung des Beaufschlagungsbereichs zu einer Verstellung des entsprechenden Fingerfräser (14, 16) in seine Frässtellung oder in seine Ruhestellung führt.

6. Fräskopf nach Anspruch 6, **dadurch gekennzeichnet, dass** zumindest eine der Fluidkanalanordnungen (18, 20) mehrere gleichmäßig beabstandete und zumindest abschnittsweise radial bezüglich der Rotationsachse (A) verlaufende erste Fluidkanäle (22) bzw. zweite Fluidkanäle (24) umfasst.

7. Fräskopf nach Anspruch 6, **dadurch gekennzeichnet, dass** die ersten Fluidkanäle (22) und zweiten Fluidkanäle (24) in Umfangsrichtung (U) zueinander versetzt angeordnet sind.

8. Bearbeitungsmaschine, insbesondere Kunststoffprofilbearbeitungsmaschine für die Bearbeitung und Verschweißung von Kunststoffprofilen, mit wenigstens einem Fräskopf (2) gemäß einem der vorhergehenden Ansprüche.

9. Bearbeitungsmaschine nach Anspruch 8, **dadurch gekennzeichnet, dass** sie ein Führungselement (30) umfasst, welches den Fräskopf (2) zumindest abschnittsweise umfangsseitig führt, vorzugsweise zumindest einen dritten Fluidkanal (32) aufweist, welcher fluidisch mit zumindest einem ersten Fluidkanal (22) und/oder einem zweiten Fluidkanal (24) verbindbar ist.

10. Bearbeitungsmaschine nach Anspruch 9, **dadurch gekennzeichnet, dass** der dritte Fluidkanal (32) zumindest zeitweise zumindest mit einem ersten Fluidkanal (22) und/oder einem zweiten Fluidkanal (24) fluidisch verbunden ist.

11. Verfahren zum Betreiben einer Bearbeitungsmaschine gemäß Anspruch 8, umfassend die folgenden Schritte:
a) Bewegen des Fräskopfes (2) mit zumindest einem Fingerfräser (14, 16) in Ruhestellung und mit um die Rotationsachse (A) rotierenden Stirnfräsern (6, 8) entlang eines ersten Verstellwegs in eine erste Richtung relativ zu einer Bearbeitungsebene eines Werkstücks,
b) dadurch erstes Spanabheben an dem Werkstück mittels zumindest einem der Stirnfräsern (6, 8),
c) Verstellen des zumindest einen Fingerfräsers (14, 16) in Frässtellung,
d) Bewegen des Fräskopfes (2) mit zumindest einem Fingerfräser (14, 16) in Frässtellung entlang des ersten Verstellwegs in eine zweite Richtung, welche unterschiedlich zu der ersten Richtung ist, relativ zu der Bearbeitungsebene des Werkstücks,
e) dadurch Spanabheben an dem Werkstück mittels zumindest einem der Fingerfräser (14, 16).

## Claims

1. Milling head comprising a base body (4), through which passes a transverse centre plane (Q), and two end milling cutters (6, 8) arranged parallel to one another, the end milling cutters (6, 8) being configured for cutting processing of workpieces and each comprising at least one axis of rotation (A) and at least one cutter carrier (10) with at least one cutting edge (12), wherein the milling head (2) additionally comprises at least one finger cutter (14, 16) through which the at least one axis of rotation (A) passes and which is rotatable about the at least one axis of rotation (A), **characterised in that** at least the one finger cutter (14, 16) is adjustable by means of an adjustment means along the axis of rotation (A) at least between an extended milling position and a retracted rest position.

2. Milling head according to any one of the preceding claims, **characterised in that** at least the one finger cutter (14, 16) is adjustable into its milling position and/or its rest position by means of air pressure as adjustment means.

3. Milling head according to any one of the preceding claims, **characterised in that** at least the one finger cutter (14, 16) is biased into its rest position by means of at least one force storage means, preferably a helical spring (38), preferably three force storage means, arranged uniformly about the axis of rotation (A), are associated with each finger cutter (14, 16) and which act between the respective finger cutter (14, 16) on the one hand and an associated fixing plate (40).

4. Milling head according to any one of the preceding claims, **characterised in that** it comprises a first finger cutter (14) and a second finger cutter (16).

5. Milling head according to any one of the preceding claims, **characterised in that** the base body (4) comprises at least one first fluid channel arrangement (18) with at least one first fluid channel (22) and/or a second fluid channel arrangement (20) with at least one second fluid channel (24), which can conduct a fluid, preferably air, and the at least one fluid channel (22, 24) leads to an impact area (42) of the at least one finger cutter (14, 16), so that fluid impact of the impact area leads to a displacement of the corresponding finger cutter (14, 16) into its milling position or into its rest position.

6. Milling head according to claim 6, **characterised in that** at least one of the fluid channel arrangements (18, 20) comprises a plurality of uniformly spaced, and at least in sections radially extending with respect to the axis of rotation (A), first fluid channels (22) and second fluid channels (24).

7. Milling head according to claim 6, **characterised in that** the first fluid channels (22) and second fluid channels (24) are arranged offset from each other in the circumferential direction (U).

8. Processing machine, in particular plastic profile processing machine for the processing and welding of plastic profiles, comprising at least one milling head (2) according to any one of the preceding claims.

9. Processing machine according to claim 8, **characterised in that** it comprises a guide element (30) which, at least in circumferential sections, guides the milling head (2), preferably has at least one third fluid channel (32) which can be fluidically connected to at least one first fluid channel (22) and/or one second fluid channel (24).

10. Processing machine according to claim 9, **characterised in that** the third fluid channel (32) is, at least from time to time, fluidically connected at least to a first fluid channel (22) and/or a second fluid channel (24).

11. Method for operating a processing machine according to claim 8, comprising the following steps:
a) moving the milling head (2) with at least one finger cutter (14, 16) in the rest position and with end milling cutters (6, 8) rotating about the axis of rotation (A) along a first adjustment path in a first direction relative to a machining plane of a workpiece,
b) thereby first cutting on the workpiece by means of at least one of the end milling cutters (6, 8),
c) adjusting the at least one finger cutter (14, 16) into the milling position,
d) moving the milling head (2) with at least one finger cutter (14, 16) in the milling position along the first adjustment path in a second direction, which is different from the first direction, relative to the machining plane of the workpiece,
e) thereby cutting on the workpiece by means of at least one of the finger cutters (14, 16).

## Revendications

1. Tête de fraisage comprenant un corps de base (4) qui est traversé par un plan médian transversal (Q), et deux fraises frontales (6, 8) agencées parallèlement l'une à l'autre, dans laquelle les fraises frontales (6, 8) sont réalisées pour l'usinage par enlèvement de copeaux de pièces à usiner et comportent respectivement au moins un axe de rotation (A) et au moins un support de coupe (10) avec au moins une arête de coupe (12), dans laquelle la tête de fraisage (2) comporte en outre au moins une fraise à queue (14, 16) traversée par l'au moins un axe de rotation (A) et rotative autour de l'au moins un axe de rotation (A), **caractérisée en ce qu'**au moins l'une fraise à queue (14, 16) est réglable à l'aide d'un moyen de réglage le long de l'axe de rotation (A) au moins entre une position de fraisage sortie et une position de repos rentrée.

2. Tête de fraisage selon l'une quelconque des revendications précédentes, **caractérisée en ce qu'**au moins l'une fraise à queue (14, 16) est réglable au moyen de l'air comprimé comme moyen de réglage dans sa position de fraisage et/ou sa position de repos.

3. Tête de fraisage selon l'une quelconque des revendications précédentes, **caractérisée en ce qu'**au moins l'une fraise à queue (14, 16) est précontrainte à l'aide d'au moins un moyen d'accumulation de force, de préférence un ressort hélicoïdal (38), dans sa position de repos, de préférence à chaque fraise à queue (14, 16) sont associés trois moyens d'accumulation de force agencés uniformément autour de l'axe de rotation (A) qui agissent entre la fraise à queue (14, 16) respective d'une part et une plaque de fixation (40) associée.

4. Tête de fraisage selon l'une quelconque des revendications précédentes, **caractérisée en ce qu'**elle comporte une première fraise à queue (14) et une seconde fraise à queue (16).

5. Tête de fraisage selon l'une quelconque des revendications précédentes, **caractérisée en ce que** le corps de base (4) comporte au moins un premier agencement de canal de fluide (18) avec au moins un premier canal de fluide (22) et/ou un second agencement de canal de fluide (20) avec au moins un second canal de fluide (24), lequel/lesquels peut/peuvent acheminer un fluide, de préférence de l'air, et l'au moins un canal de fluide (22, 24) mène à une zone d'alimentation (42) d'au moins une fraise à queue (14, 16) de sorte qu'une alimentation en fluide de la zone d'alimentation mène à un réglage de la fraise à queue (14, 16) correspondante dans sa position de fraisage ou dans sa position de repos.

6. Tête de fraisage selon la revendication 6, **caractérisée en ce qu'**au moins un des agencements de canal de fluide (18, 20) comporte plusieurs premiers canaux de fluide (22) ou seconds canaux de fluide (24) espacés uniformément et s'étendant au moins par sections radialement en se référant à l'axe de rotation (A).

7. Tête de fraisage selon la revendication 6, **caractérisée en ce que** les premiers canaux de fluide (22) et seconds canaux de fluide (24) sont agencés en déport dans le sens périphérique (U) l'un à l'autre.

8. Machine d'usinage, en particulier machine d'usinage de profil en matière plastique pour l'usinage et le soudage de profils en matière plastique, avec au moins une tête de fraisage (2) selon l'une quelconque des revendications précédentes.

9. Machine d'usinage selon la revendication 8, **caractérisée en ce qu'**elle comporte un élément de guidage (30) qui mène la tête de fraisage (2) au moins par sections côté périphérie, de préférence présente au moins un troisième canal de fluide (32) qui peut être relié de manière fluidique à au moins un premier canal de fluide (22) et/ou un deuxième canal de fluide (24).

10. Machine d'usinage selon la revendication 9, **caractérisée en ce que** le troisième canal de fluide (32) est relié au moins temporairement au moins à un premier canal de fluide (22) et/ou à un second canal de fluide (24) de manière fluidique.

11. Procédé de fonctionnement d'une machine d'usinage selon la revendication 8, comprenant les étapes suivantes :
a) déplacement de la tête de fraisage (2) avec au moins une fraise à queue (14, 16) en position de repos et avec des fraises frontales (6, 8) tournant autour de l'axe de rotation (A) le long d'une première course de réglage dans un premier sens par rapport à un plan d'usinage d'une pièce à usiner,
b) ainsi premier enlèvement de copeaux au niveau de la pièce à usiner au moyen d'au moins une des fraises frontales (6, 8),
c) réglage d'au moins une fraise à queue (14, 16) en position de fraisage,
d) déplacement de la tête de fraisage (2) avec au moins une fraise à queue (14, 16) en position de fraisage le long de la première course de réglage dans un second sens qui est différent du premier sens, par rapport au plan d'usinage de la pièce à usiner,
e) ainsi enlèvement de copeaux au niveau de la pièce à usiner au moyen d'au moins une des fraises à queue (14, 16).
